# EUROPEAN PATENT SPECIFICATION

(11) **EP 1 421 794 B1**
(45) Date of publication and mention of the grant of the patent: **17.10.2007**
(21) Application number: 02755563.0
(22) Date of filing: 12.08.2002
(51) Int. Cl.: H04N 7/173

(54) **IMPROVEMENTS IN AND RELATING TO CONTENT SELECTION**
VERBESSERUNGEN BEZÜGLICH DER INHALTSAUSWAHL
AMELIORATIONS PORTANT SUR LA SELECTION DE CONTENUS

(30) Priority: 31.08.2001 GB 0121170
(43) Date of publication of application: 26.05.2004
(73) Proprietor: Nokia Corporation, 02150 Espoo (FI)
(72) Inventor: LÖYTÄNÄ, Kimmo, FIN-33720 Tampere (FI); UOLA, Juha, FIN-33720 Tampere (FI)
(74) Representative: Piotrowicz, Pawel Jan Andrzej
(86) International application number: PCT/IB2002/003428
(87) International publication number: WO 2003/019944

(56) References cited:
- WO-A-01/15449
- WO-A-99/01984
- WO-A-03/003723
- DE-A- 19 846 452
- US-A- 5 798 785
- US-A- 6 130 726

## Description

The present invention relates to the selection of content, particularly, although not exclusively delivered over a digital broadband broadcast network.

Digital broadband data broadcast networks are known. An example of such a network enjoying popularity in Europe and elsewhere world-wide is Digital Video Broadcast (DVB) which in addition to the delivery of televisual content is capable of delivering data. Another example of a broadband data broadcast network is that provided under the Advanced Television Systems Committee (ATSC). Both ATSC and DVB utilise a containerisation technique in which content for transmission is placed into MPEG-2 packets which act as data containers. Thus, the containers can be utilised to transport any suitably digitised data including, but not limited to High Definition TV, multiple channel Standard definition TV (PAL / NTSC or SECAM) and, of course, broadband multimedia data and interactive services.

In addition to the content, the transmissions of a typical broadband digital broadcast also contain metadata describing the content being presently delivered together with content intended to be transmitted in the near future. This metadata that describes the said content is referred to as service information. In a DVB network, the DVB Service Information protocol as specified in the DVB Service Information specification (EN 300 468) can be used for transmitting this service information; however, the concept of service information is not limited to using the said DVB protocol. The service information is typically used in a digital broadband broadcast receiver for providing electronic programme guides (EPG) to the user on her display. Depending on the capabilities of a receiver, the user may be able to select programming for viewing, set reminders, and browse by genre, time or channel.

It is also known to provide a receiver, also referred to as a set top box (STB) with an integrated recording and playback facility. Typically, a hard disk or similar storage device provides the ability to record content for later use, whether for playback, in the case of televisual content or off-line access, in the case of data content. Where such a facility is integrated with the receiver then it is relatively straightforward to ensure that recording of content can take utilising selections made from the EPG. Clearly, more complexity and opportunity for error is present where a recording facility is not integrated in the STB as is the case where a stand alone storage is provided such as through a DVD writer, VCR or the like.

WO-A-9901984 describes a subscriber unit for use in a television system. A subscriber unit includes a receiving unit for receiving program scheduled information, a profile storage unit for storing at least one viewer preference profile of at least one television viewer, and intelligent agent for customising the program schedule information based on the viewer preference profile to produce a program guide including customised program schedule information and display apparatus for displaying the program guide. Alternatively, a head end maybe comprise a head end intelligent agent and a head end profile storage unit which can produce the customised program schedule information.

WO-A-0115449 describes a system for generating program recommendations for a plurality if users based on program metadata and user profiles.

According to a first aspect of the invention, there is provided a terminal for receiving a broadband digital transmission, the terminal including a receiver selectably operable to extract content from said transmission, said receiver further being operable to extract metadata from said transmission and a filter arranged to receive said metadata and operable in accordance with a set of user specific content preferences to output personalised metadata via a network interface to a device, wherein the receiver is operable, in response to a request received via said interface, to extract particular content identified in said personalised metadata and the user-specific content preferences are augmentable by a set of parameters defining the capabilities of the device and the filter being further operable to take account of the capabilities when filtering the metadata.

As a result of filtering the large amount of information delivered in the metadata, it is possible to bring about a reduction in bandwidth requirements. The personalised metadata is thus suited to delivery over narrow channels and, in particular narrowband devices such as PDAs, mobile stations and the like. Typically, in the case of a DVB digital broadband transmission, the metadata is in the form of a service information datastream. A user in possession of such a device may be able to select content remotely for extraction by the terminal, typically for recording purposes perhaps utilising an integrated recording device such as a hard disk or the like. If the content preferences of the user have been previously determined then she should be more readily able to select content which she is desirous of having recorded, displayed or otherwise rendered by the terminal.

The content preferences of the user may be determined, for example, by the user configuring herself which types of content she is interested in and which types of content she is not interested in, etc. It is also possible that the terminal learns the preferences of the user by observing the usage behaviour of the user. With this learning mechanism, these two methods can also be combined to produce the content preferences of the user and they can be further augmented via other means.

The network interface may provide the opportunity to establish a channel to local as well as remote devices. Local devices might include those equipped with personal area networking capability through Infrared, low power radio frequency (LPRF) or other similar connectivity solutions, including various local area networking technologies. Remote devices might include PDAs, cellular mobile handsets and terminals connected via suitable gateways from their respective networks such as Public Land Mobile Networks (PLMNs), Intranets and the like via the Internet to the network interface. The device may be implemented as a card for insertion into an expansion slot on an existing terminal for receiving digital broadband transmissions. Alternatively, the device could be integrated with or form an expansion option for a socalled home gateway providing a bridging service between a home LAN or WLAN and an external network such as, but not limited to the Internet.

According to a still further aspect of the invention, there is provided a network interface according to claim 8.

The parameters may define the speed, display characteristics and other features of the device. Consequently, account may be taken of these capabilities in the filtering of the metadata. In some cases, where the capabilities of the device are appropriate, the personalised metadata may be supplemented with actual content such as trailers, advertisements and the like which may be rendered by the device.

According to a yet further aspect of the invention, there is provided a device according to claim 10.

It will be appreciated that by providing the device with appropriate interfaces, it can establish a channel over a number of different connections. Thus the device may utilise a wireless channel via low power radio frequency, infrared, WLAN to name but a few in addition to establishing a channel over a PLMN or other such WAN. Thereby, a user of the device is able to select content for recording, display or the like when she is both in proximity to the terminal, for example within her home, as well as when she is away from home perhaps in a foreign country.

According to another aspect of the invention, there is provided a method of selecting content for extraction according to claim 12.

Thus, if a user of the device has a recording function at home together with the terminal, she is able to record the broadcast content also when she is not directly viewing it. Traditionally the user has had to program this recorder, e.g. VCR, to record a given piece of content in advance when she has physically been at home. By controlling the terminal and the recording function from a wireless device, the user is able to program the recording device to record some piece of content remotely while outside the home.

Thus, according to another aspect of the invention, there is provided a method of selecting content according to claim 23.

In order to aid in understanding the present invention, a number of embodiments thereof will now be described by way of example and with reference to the accompanying drawings, in which:
Figure 1 is a block diagram of a typical consumer receiver/transmitter arrangement;
Figure 2 is a block diagram of a first embodiment of receiver arrangement according to the present invention;
Figure 3 is a block diagram of a further embodiment of a receiver arrangement according to the present invention;
Figure 4, is a block diagram of a still further embodiment of a receiver arrangement according to the present invention;
Figure 5, is a block diagram illustrating in more detail the receiver arrangement of Figures 3 and 4; and
Figure 6, is a block diagram illustrating a variant of the arrangement of Figure 5.

In the following, although reference is made to a terrestrial digital video broadcasting network (DVB-T), it will be clearly understood that the invention is applicable to any such digital broadband data broadcast network and is not therefore intended to be limited by references to DVB-T.

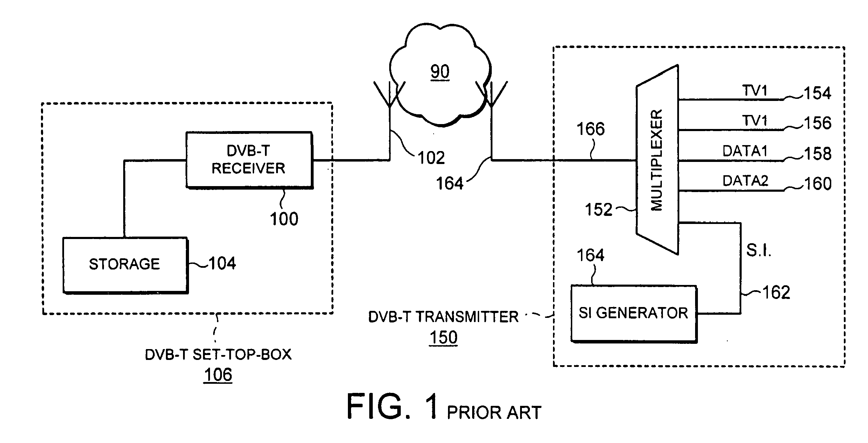

Figure 1 is a block diagram of a typical prior art consumer receiver/transmitter arrangement in which a terrestrial digital video broadcasting (DVB-T) transmitter 150 transmits a DVB-T signal to a DVB-T set-top-box receiver (STB) 106.

In the transmitter 150, a number of television channels 154 and 156 are multiplexed together with a number of data channels 158 and 160 by a multiplexer 152. In addition to this, service information (SI) 162, which contains details of each of the other multiplexed channels, is also input to the multiplexer 152, provided by a SI generator 164. The multiplexer creates a single, multiplexed, signal 166 which contains all of the separate channels 154, 156, 158 and 160, along with the SI 162. Further details of the multiplexing and SI may be found in the DVB-T specification (EN 300 468) dated August 1998. The multiplexed signal 166 is transmitted via an antenna 164, across a transmission channel 90, to an antenna 102 of a set-top-box receiver 106. In the case of DVB-T, the transmission channel is a terrestrial transmission channel. However, the transmission channel could be any one of a satellite, microwave; cable or optical channel. Further details of transmission over such channels may be found in the DVB-S specification (EN 300 421), DVB-MS (EN 300 748) and DVB-MC (EN 301 749), DVB-C (EN 300 429) and other publications of the Digital Video Broadcast Project. Further examples may also be located in the relevant publication of other organisations concerned with the development and/or implementation of Digital broadband broadcast networks.

The signals received by the antenna 102 are input to a DVB-T receiver 100 which enables the user to select a desired channel. Received data may also be stored in storage 104.

Whilst the set-top-box 106 is switched on, the DVB-T receiver 100 is also powered up and receiving DVB-T signals. The DVB-T receiver is constantly decoding SI information 162 which provides details of the content and location of each of the channels within the received multiplexed signal. The SI information 162 also contains schedule details for each of the multiplexed channels 154, 156, 158, 160. The SI 162 can also contain schedule details for content and channels in other multiplexes transmitted by other transmitters. The schedule details provided by the SI 162 allow a user to watch or record a specific programme of interest. For example, if the set-top-box 106 is connected to a personal computer (not shown), it is possible to receive data transmitted over the DVB-T network for use with the personal computer. In this way, the transmission of large data files can be broadcast, to a large audience, using the high data rates provided by DVB-T transmission. If a data file is due to be transmitted at a certain time on a certain channel, the SI information 162 will contain this information which can be used by the personal computer to ensure that receiver receives the required data.

SI information 162 may change frequently, to reflect not only changes in program scheduling, but also to reflect re-allocation of frequencies and channels etc by the broadcaster. For example, it is possible for a channel to broadcast on a different frequency to that scheduled originally. Since the SI contains details of the frequencies (or changes to the frequencies), a receiver 100 is thus able to receive the desired channel and/or program. Some set-top-boxes 106 store SI information in storage 104 , thereby allowing users to browse a schedule or program guide. However, due to the nature of SI information 162, the SI information is updated frequently to ensure that no discrepancies exist between the SI stored by the set-top-box 106 and the SI 162 being transmitted by the broadcaster.

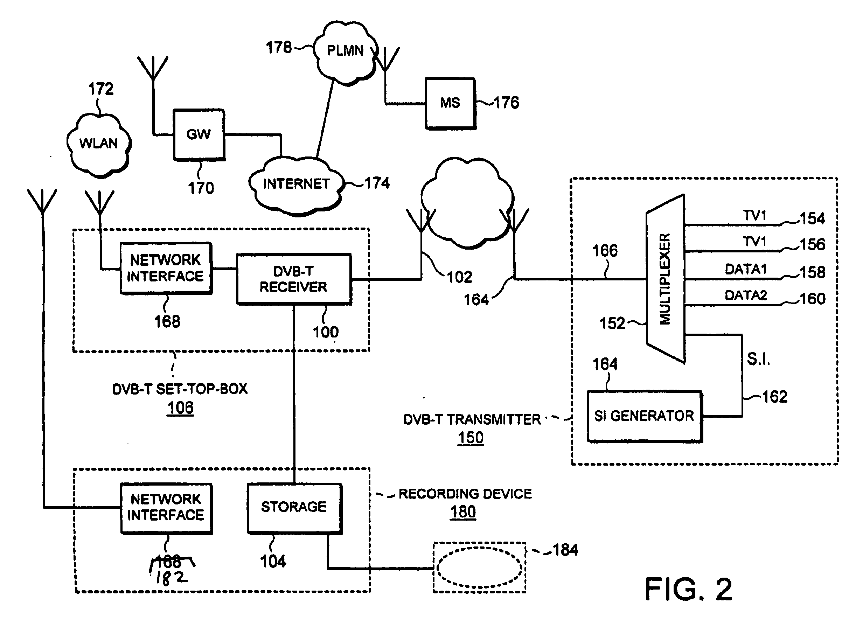

Referring now to Figure 2, this illustrates an embodiment of the invention in which like reference numerals are utilised to reference similar elements to those described above in relation to Figure 1.

A STB 106 is provided with a network interface 168 having a transceiver providing a wireless channel to a home gateway 170, which gateway acts a hub of a Wireless Local Area Network (WLAN) 172. In addition, the home gateway 170 provides connectivity to an external network such as the Internet 174. Thus, a remote terminal 176 such as a mobile station, PDA or the like forming part of a Public Land Mobile Network (PLMN) 178 may establish a channel with the home gateway 170.

In addition to the connectivity described above, the home gateway 170 may additionally be provided with a Personal Area Network (PAN) interface (not shown) which permits a channel to be established directly with a local mobile station, PDA or the like. The PAN interface may operate on an infrared, Low power radio frequency e.g. Bluetooth, or any other suitable basis. Any suitable transport protocol including WAP, I-mode or the like may be utilised to provide a bi-directional communication capability.

In this example the STB 106 is further provided with wireline connection to an external recording device 180. The recording device 180 is provided with storage 104 for content obtained from the STB 106 and a WLAN interface 182 having a transceiver providing a wireless channel to the home gateway 170. The recording device 180 is provided with the functionality typical of such a device and as such will be well understood by those skilled in the art. Thus, within its functionality is the ability to record selected content obtained from the STB 106 and to playback the content on demand via a separate display 184 (shown in chain). In order to prepare the recording device 180 to record content, it is necessary to instruct the recording device 180 what content it is desired to record. Thus, it is necessary to provide the recording device 180 with identifying details of the selected content, for example but not limited to the time, date and channel on which the content is being delivered. Such details may be provided locally through a dedicated wireless remote control (not shown) accessing a wireless interface provided in the recording device. Alternatively, such details may be provided over the WLAN 172 to which the recording device 180 is connected. Consequently, the details of time, date and channel may be delivered to the recording device 180 from the remote terminal 176 such as a mobile station, PDA or the like forming part of a Public Land Mobile Network (PLMN) and having previously established a channel via the home gateway 170. The channel may be established using any suitable transport protocol including WAP, I-mode or the like and thus provides a bi-directional communication capability.

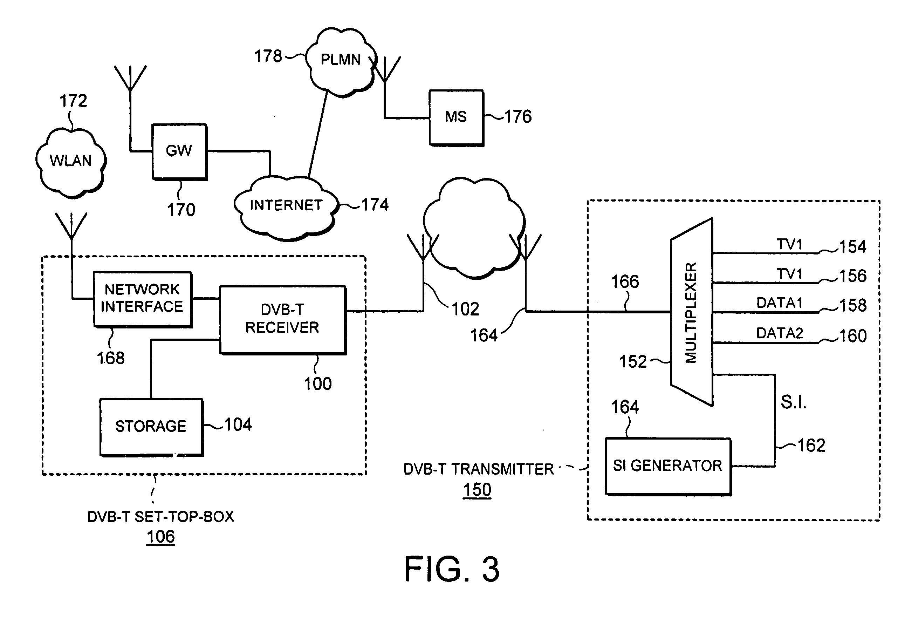

In another example shown in Figure 3, the STB 106 has an integrated storage 104 for content delivered thereto. The storage 104 may be utilised in the manner previously described in relation to the external recording device 184 with the difference that communication with a remote terminal takes place via the STB network interface 168.

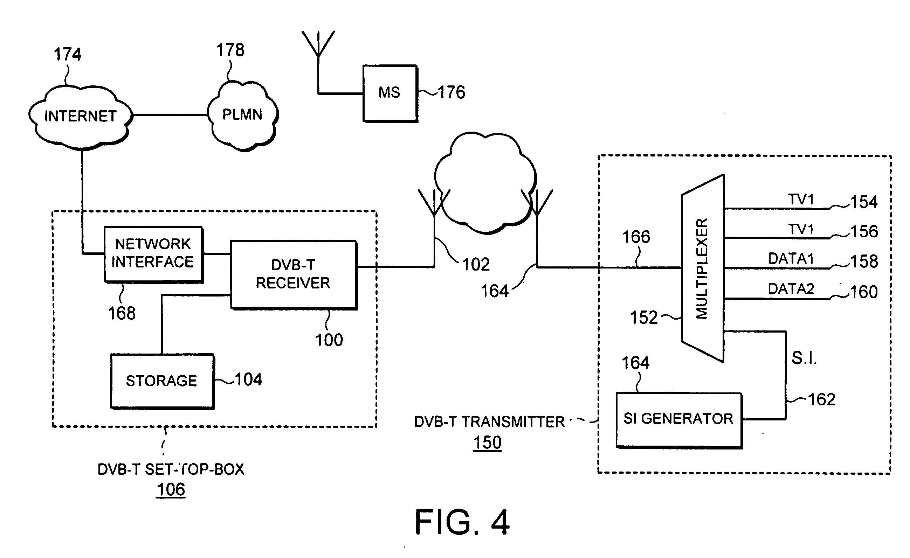

In a still further example shown in Figure 4, a WLAN is dispensed with in favour of a direct connection between the network interface 168 of the STB 106 and the Internet 174. The connection may be made via a dial-up modem, XDSL, ISDN or any other suitable technique. Such techniques are, of course, suitable for connecting a WLAN to the Internet.

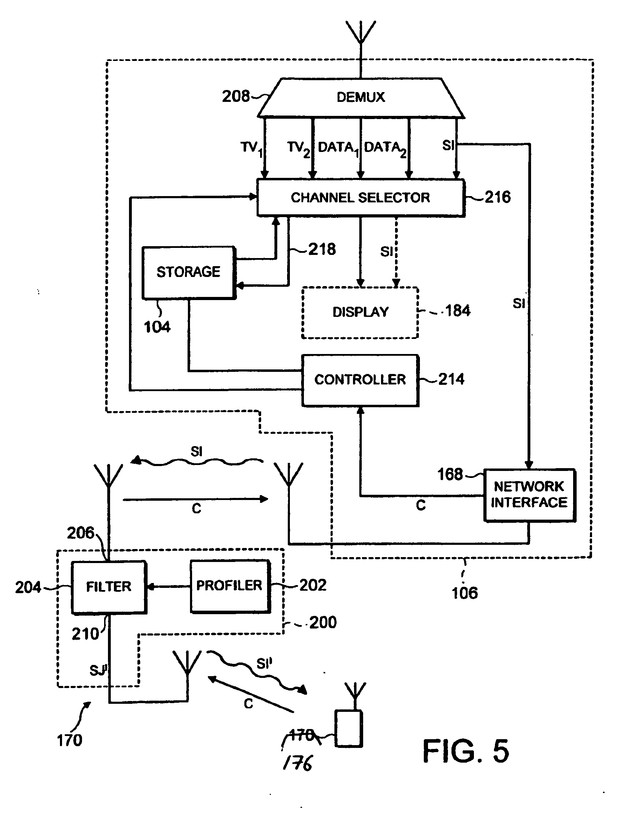

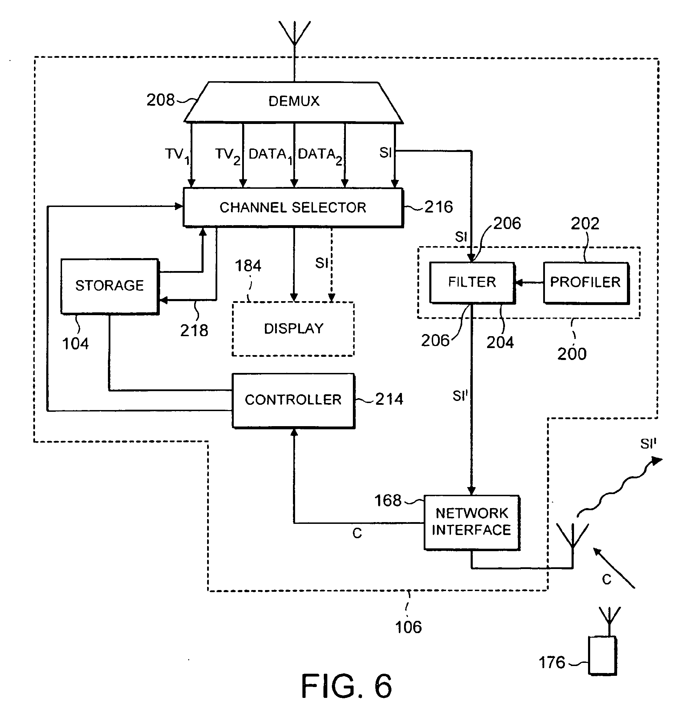

Turning now to Figures 5 and 6, these illustrate two possible embodiments of a personalisation and filtering stage 200. The personalisation and filtering stage 200 is intended to reduce the amount of metadata relating to content (hereinafter service information 162) that need, initially at least, be provided to a terminal 176 to facilitate selection of content for recording, by way of example. In the embodiment shown in Figure 6, the personalisation and filtering stage 200 is integrated with the STB 106. However, in Figure 5, the personalisation and filtering stage 200 is present within the home gateway . 170, and a stream of service information (SI) is received at the home gateway 170, only a portion of which providing the personalisation and filtering stage 200 is shown in Figure 5.

Referring to Figure 5, the personalisation and filtering stage 200 includes a profiler 202 which holds details of user content preferences. Such details may be entered directly by a user by way of an exception list that is content for which the user has no interest. Alternatively or additionally, the details may be entered by way of an inclusion list, that is content in which the user is interested. The content itself is categorised In the service information 162 in a number of ways. Thus, the content may be categorised by genre, keywords, participants, language, and so on and it is based on the categories that the preferences are built up within the profiler 202. The implementation of the User Interfaces (UI) necessary to facilitate the storage of details in the profile are clearly within the ability of those skilled in the art.
It is also possible that the device teams the content preferences of the user by observing the previous usage patterns of the user. In this case, the user does not need to explicitly configure all the preferences via a User Interface. These two mechanisms can be combined so that the user initially provides a coarse-grained set of preferences via explicit configuration and then the device further refines the preferences all the time by observing the usage.

The profile 202 is operatively connected to a filter 204. The filter 204 has an input 206 which receives a stream of service information (SI) from a demultiplexor 208. The demultiplexor 208 receives a signal broadcast by the transmitter 150. The service information (SI) received by the filter 204 corresponds to that created by the SI generator 164 within the transmitter 150. The filter 204 receives the service information (SI) and in accordance with the preferences stored in the profiler 202, outputs 210 a stream of personalised service information (SI). The personalised SI' is then delivered to the network interface 168.

As will be understood from the earlier description, the network interface 168 permits the establishment of a channel to a remote device. Referring for a moment to Figure 3, a request to access the personalised service information (SI') is addressed to the STB 106 via a channel established over a PLMN 178, the Internet and finally the WLAN 172. Thus a channel is established and the stream of personalised service information (SI') is delivered to the device 176. Within the device 176, the personalised service information (SI') information is rendered to the user who is presented with the option to select content for recording or other rendering purposes. Once content has been selected at the device 176, an instruction (C) is delivered over the channel which is received by the network interface 168. The network interface 168 passes the instruction to a controller 214. The controller 214 is operatively connected to a channel selector 216 of the STB 106 and the internal storage 104. Thus, the controller 214 acts on the request (C) by identifying from the content selection the identifying details of the content. These identifying details are then used to determine the time, date and channel at which the content will be available to be recorded. When these parameters are satisfied, the controller 214 causes the relevant selections to be made in the channel selector 216 and the output 218 is directed to storage 104.

In the circumstances where storage is not integrated with the STB 106, such as the embodiment illustrated in Figure 2, then the operation of the controller 214 differs in the following respect. Instead of issuing a record or other rendering command to the storage 104 of the STB 106, the controller 216 generates an instruction for the external recording device 180. The instruction is delivered via the network interface 168 of the STB 106 over the WLAN 172 of which the home gateway 170 is the hub. The home gateway 170 ensures that the instruction is delivered over the network interface 182 of the recording device 180 The recording device 180 is then able to initiate recording of the selected content in accordance with the instructions received over its own interface 182.

Referring now to Figure 6, this illustrates an embodiment in which, as previously indicated, the personalisation and filtering stage 200 is integrated with the STB 106. Thus, in this embodiment, a stream of service information (SI) is directed from the demultiplexor 208 to the personalisation and filtering stage 200 of the STB 106. As has been described in relation to the embodiment illustrated in Figure 5, the personalisation and filtering stage 200 includes a profiler 202 which holds details of user content preferences. Such details may be entered directly by a user by way of an exception list that is content for which the user has no interest. Alternatively or additionally, the details may be entered by way of an inclusion fist, that is content in which the user is interested. The content itself is categorised in the service information in a number of ways. Thus, the content may be categorised by genre, keywords, participants, language, and so on and it is based on the categories that the preferences are built up within the profiter 202.

The profiler 202 is operatively connected to a filter 204. The filter 204 has an input 266 which receives the stream of service information (SI) from the network interface (168) and in accordance with the preferences stored in the profiler 202, outputs a stream of personalised service information (SI'). This personalised service information stream (SI') is then made available to a terminal 176 which has previously established a channel via the home gateway 170 or, as shown in Figure 4 via a direct Internet connection. The subsequent operation of the terminal 176 in order to select content for recording has been described above inasmuch as instructions to record content are delivered to the STB network interface 168 and received and acted upon by the controller 214 as has previously been described. Again, where a recording device is not integrated with the STB 106, the controller 214 is operable to generate instructions to be delivered to the external recording device 180 over the WLAN 172.

## Claims

1. A terminal (106) for receiving a broadband digital transmission, the terminal including a receiver selectably operable to extract content from said transmission, said receiver further being operable to extract metadata (SI) from said transmission and a filter (204) arranged to receive said metadata and the terminal further comprises a network interface (168) and the filter (204) is operable in accordance with a set of user specific content preferences to output personalised metadata (SI') via the network interface (168) to a device (176), and, in response to a request (C) received via said interface, to extract particular content identified in said personalised metadata **characterised in that** the user-specific content preferences are augmentable by a set of parameters defining the capabilities of the device (176) and the filter being further operable to take account of the capabilities when filtering the metadata (SI).

2. A terminal as claimed in Claim 1, wherein said metadata (SI) comprises service information.

3. A terminal as claimed in Claim 1, wherein said network interface (168) provides network capability through a low power radio frequency technology.

4. A terminal as claimed in Claim 3, wherein said network interface (168) provides network capability through Bluetooth technology.

5. A terminal as claimed in Claim 1, wherein said network interface (168) is a wireless network interface (168).

6. A terminal as claimed in Claim 1, wherein the personalized metadata (SI') is output with supplemental content.

7. A terminal as claimed in Claim 1, being operable to output said particular content to said wireless network interface (168).

8. A network interface (168) having a connection to a broadband digital broadcast receiver terminal (106), the interface including an input for meta data (SI) received from said receiver terminal and a filter operable in accordance with a set of user-specific content preferences to generate personalized metadata (SI') to be directed to a device (176) **characterised in that** the user-specific content preferences are augmentable by a set of parameters defining the capabilities of the device (176) and the filter being further operable to take account of the capabilities when filtering the metadata (SI).

9. A network interface as claimed in Claim 8, wherein said personalized metadata (SI') comprises service information identified according to said preferences.

10. A device (176) including a wireless transceiver operable to establish a channel to a terminal (106) for selectably extracting content from a digital broadband transmission, the device further comprising a display, a controller and an input device, wherein the controller is operable in response to the delivery from said terminal of personalized metadata (SI') identifying content in said transmission to render said metadata on said display and the controller is further operable, in response to actuation of said input device, to make a selection from said rendered metadata and to generate a request (C) for delivery by said transceiver over said channel, the request identifying content to be extracted by said terminal **characterised in that** the device (176) is operable to transmit a set of parameters defining the capabilities of the device.

11. A device as claimed in Claim 10, wherein the device (176) is a mobile phone.

12. A method of selecting content for extraction by a terminal (106) from a digital broadband transmission delivered thereto, comprising extracting metadata (SI) from a transmission received by said terminal, said metadata identifying content delivered in said transmission, filtering said metadata in accordance with a predetermined set of user preferences to obtain personalized metadata (SI'), delivering said personalized metadata (SI') to a device (176), receiving a selection request (C) from said device comprising information identifying said content **characterised in that** the user preferences are augmentable by a set of parameters defining the capabilities of the device (176) and the method further comprises filtering the metadata (SI) taking into account the capabilities.

13. A method as claimed in Claim 12 wherein transmitting the personalized metadata (SI') to the device (176) and receiving the selection request therefrom takes place using the Wireless Application Protocol (WAP).

14. A method as claimed in Claim 12 or Claim 13, wherein transmitting the personalized metadata (SI') to the device (176) and receiving the selection request therefrom takes place using a Java application in the device.

15. A method as claimed in any one of Claims 12 to 14, wherein said personalized metadata (SI') is delivered to said device (176) in response to a browse request received therefrom.

16. A method as claimed in any one of Claims 12 to 15, including identifying particular content from said personalized metadata (SI') and generating a message for delivery to said device (176), said message being indicative of said particular content.

17. A method as claimed in any one of Claims 12 to 15, including identifying particular content from said personalized metadata (SI') and generating a message for delivery to said terminal, said message being indicative of said particular content.

18. A method as claimed in any one of Claims 12 to 17, wherein delivery of said personalized metadata (SI') is accompanied by content.

19. A method as claimed in any one of Claims 12 to 18, wherein the content is also filtered based on user preferences and characteristics of the said device (176).

20. A method as claimed in any one of Claims 12 to 19, wherein the digital broadband transmission is a DVB broadcast transmission.

21. A method as claimed in Claim 20, wherein the metadata (SI) comprises service information included within the broadband digital broadcast transmission.

22. A method as claimed in any one of claims 12 to 21, wherein the metadata (SI) comprises service information data stream.

23. A method of selecting content in a device (176) for extraction by a terminal (106) from a digital broadband transmission delivered thereto, comprising transmitting a set of parameters defining the capabilities of the device, receiving personalized metadata (SI') from said terminal; identifying particular content from said personalized metadata and generating a message for delivery to said terminal, said message being indicative of said particular content and receiving said particular content from said terminal.

24. A method as claimed in any one of claims 12 to 23, wherein the personalized metadata (SI') is filtered according to characteristics of the device (176).

25. A method as claimed in any one of claims 12 to 24, wherein the terminal (106) is a broadband digital broadcast receiver.

26. A method as claimed in any one of claims 12 to 25, wherein the device (176) is a mobile phone.

## Patentansprüche

1. Endgerät (106) zum Empfangen einer digitalen Breitbandübertragung, wobei das Endgerät einen Empfänger, der wahlweise betreibbar ist, um den Inhalt aus der Übertragung zu extrahieren, und ferner betreibbar ist, um Metadaten (SI) aus der Übertragung zu extrahieren, und ein Filter (204), das so beschaffen ist, dass es die Metadaten empfängt, umfasst, wobei das Endgerät ferner eine Netzschnittstelle (168) umfasst und das Filter (204) in Übereinstimmung mit einem Satz von anwenderspezifischen Inhaltspräferenzen betreibbar ist, um personalisierte Metadaten (SI') über die Netzschnittstelle (168) an eine Vorrichtung (176) auszugeben und um in Reaktion auf eine über die Schnittstelle empfangene Anforderung (C) einen bestimmten Inhalt, der in den personalisierten Metadaten identifiziert wird, zu extrahieren, **dadurch gekennzeichnet, dass** die anwenderspezifischen Inhaltspräferenzen durch einen Satz von Parametern ergänzt werden können, die die Fähigkeiten der Vorrichtung (176) definieren, und das Filter ferner betreibbar ist, um die Fähigkeiten beim Filtern der Metadaten (SI) zu berücksichtigen.

2. Endgerät nach Anspruch 1, bei dem die Metadaten (SI) Dienstinformationen enthalten.

3. Endgerät nach Anspruch 1, bei dem die Netzschnittstelle (168) Netzfähigkeiten über eine Niedrigleistungs-Hochfrequenztechnologie bereitstellt.

4. Endgerät nach Anspruch 3, bei dem die Netzschnittstelle (168) Netzfähigkeiten über die Bluetooth-Technologie bereitstellt.

5. Endgerät nach Anspruch 1, bei dem die Netzschnittstelle (168) eine drahtlose Netzschnittstelle (168) ist.

6. Endgerät nach Anspruch 1, bei dem die personalisierten Metadaten (SI') mit einem zusätzlichen Inhalt ausgegeben werden.

7. Endgerät nach Anspruch 1, das betreibbar ist, um den bestimmten Inhalt zu der drahtlosen Netzschnittstelle (168) auszugeben.

8. Netzschnittstelle (168), die eine Verbindung zu einem digitalen Breitband-Rundfunkempfängerendgerät (106) hat, wobei die Schnittstelle einen Eingang für Metadaten (SI), die von dem Empfängerendgerät empfangen werden, und ein Filter, das in Übereinstimmung mit einem Satz von anwenderspezifischen Inhaltspräferenzen betreibbar ist, um personalisierte Metadaten (SI') zu erzeugen, die zu der Vorrichtung (176) gelenkt werden sollen, umfasst, **dadurch gekennzeichnet, dass** die anwenderspezifischen Inhaltspräferenzen durch einen Satz von Parametern ergänzt werden können, die die Fähigkeiten der Vorrichtung (176) definieren, und das Filter ferner betreibbar ist, um die Fähigkeiten beim Filtern der Metadaten (S1) zu berücksichtigen.

9. Netzschnittstelle nach Anspruch 8, bei der die personalisierten Metadaten (SI') Dienstinformationen, die entsprechend den Präferenzen identifiziert werden, enthalten.

10. Vorrichtung (176), die einen drahtlosen Sender/Empfänger enthält, der betreibbar ist, um einen Kanal zu einem Endgerät (106) aufzubauen, um wahlweise Inhalt aus der digitalen Breitbandübertragung zu extrahieren, wobei die Vorrichtung ferner eine Anzeige, eine Steuereinheit und eine Eingabevorrichtung umfasst, wobei die Steuereinheit in Reaktion auf die Lieferung personalisierter Metadaten von dem Endgerät (SI'), die Inhalt in der Übertragung identifizieren, so betreibbar ist, dass die Metadaten auf der Anzeige angezeigt werden, und die Steuereinheit ferner in Reaktion auf die Betätigung der Eingabevorrichtung betreibbar ist, um eine Auswahl unter den angezeigten Metadaten zu treffen und eine Anforderung (C) einer Lieferung durch den Sender/Empfänger über das Netz zu erzeugen, wobei die Anforderung Inhalt identifiziert, der durch das Endgerät extrahiert werden soll, **dadurch gekennzeichnet, dass** die Vorrichtung (176) betreibbar ist, um einen Satz von Parametern zu übertragen, die die Fähigkeiten der Vorrichtung definieren.

11. Vorrichtung nach Anspruch 10, wobei die Vorrichtung (176) ein Mobiltelefon ist.

12. Verfahren zum Auswählen von Inhalt, der durch ein Endgerät (106) aus einer digitalen Breitbandübertragung, die an das Endgerät geliefert wird, extrahiert werden soll, wobei das Verfahren umfasst: Extrahieren von Metadaten (SI) aus einer Übertragung, die von dem Endgerät empfangen wird, wobei die Metadaten Inhalt identifizieren, der in der Übertragung geliefert wird, Filtern der Metadaten in Übereinstimmung mit einem vorgegebenen Satz von Anwenderpräferenzen, um personalisierte Metadaten (SI') zu erhalten, Liefern der personalisierten Metadaten (SI') zu einer Vorrichtung (176) und Empfangen einer Auswahlanforderung (C) von der Vorrichtung, die Informationen enthält, die den Inhalt identifizieren, **dadurch gekennzeichnet, dass** die Anwenderpräferenzen durch einen Satz von Parametern ergänzt werden können, die die Fähigkeiten der Vorrichtung (176) definieren, und das Verfahren ferner das Filtern der Metadaten (S1) unter Berücksichtigung der Fähigkeiten umfasst.

13. Verfahren nach Anspruch 12, bei dem das Übertragen der personalisierten Metadaten (SI') an die Vorrichtung (176) und das Empfangen der Auswahlanforderung hiervon unter Verwendung des *Wireless Application Protocol* (WAP) erfolgen.

14. Verfahren nach Anspruch 12 oder Anspruch 13, bei dem das Übertragen der personalisierten Metadaten (SI') an die Vorrichtung (176) und das Empfangen der Auswahlanforderung hiervon unter Verwendung einer Java-Applikation in der Vorrichtung erfolgen.

15. Verfahren nach einem der Ansprüche 12 bis 14, bei dem die personalisierten Metadaten (SI') an die Vorrichtung (176) in Reaktion auf eine hiervon empfangene *Browse*-Aufforderung geliefert werden.

16. Verfahren nach einem der Ansprüche 12 bis 15, das das Identifizieren eines bestimmten Inhalts aus den personalisierten Metadaten (SI') und das Erzeugen einer Nachricht, die zu der Vorrichtung (176) geliefert werden soll, umfasst, wobei die Nachricht den bestimmten Inhalt angibt.

17. Verfahren nach einem der Ansprüche 12 bis 15, das das Identifizieren eines bestimmten Inhalts aus den personalisierten Metadaten (SI') und das Erzeugen einer Nachricht, die zu dem Endgerät geliefert werden soll, umfasst, wobei die Nachricht den bestimmten Inhalt angibt.

18. Verfahren nach einem der Ansprüche 12 bis 17, bei dem das Liefern der personalisierten Metadaten (SI') von einem Inhalt begleitet wird.

19. Verfahren nach einem der Ansprüche 12 bis 18, bei dem der Inhalt außerdem anhand von Anwenderpräferenzen und von Charakteristiken der Vorrichtung (176) gefiltert wird.

20. Verfahren nach einem der Ansprüche 12 bis 19, bei dem die digitale Breitbandübertragung eine DVB-Rundfunkübertragung ist.

21. Verfahren nach Anspruch 20, bei dem die Metadaten (SI) Dienstinformationen enthalten, die in der digitalen Breitband-Rundfunkübertragung enthalten sind.

22. Verfahren nach einem der Ansprüche 12 bis 21, bei dem die Metadaten (SI) einen Dienstinformations-Datenstrom enthalten.

23. Verfahren zum Auswählen von Inhalt in einer Vorrichtung (176), der durch ein Endgerät (106) aus einer digitalen Breitbandübertragung, die an das Endgerät geliefert wird, extrahiert werden soll, wobei das Verfahren umfasst: Senden eines Satzes von Parametern, die die Fähigkeiten der Vorrichtung definieren, Empfangen personalisierter Metadaten (SI') von dem Endgerät; Identifizieren eines bestimmten Inhalts aus den personalisierten Metadaten, Erzeugen einer Nachricht, die zu dem Endgerät geliefert werden soll, wobei die Nachricht den bestimmten Inhalt angibt, und Empfangen des bestimmten Inhalts von dem Endgerät.

24. Verfahren nach einem der Ansprüche 12 bis 23, bei dem die personalisierten Metadaten (SI') in Übereinstimmung mit Charakteristiken der Vorrichtung (176) gefiltert werden.

25. Verfahren nach einem der Ansprüche 12 bis 24, bei dem das Endgerät (106) ein digitaler Breitband-Rundfunkempfänger ist.

26. Verfahren nach einem der Ansprüche 12 bis 25, bei dem die Vorrichtung (176) ein Mobiltelefon ist.

## Revendications

1. Terminal (106) destiné à recevoir une transmission numérique à large bande, le terminal comprenant un récepteur pouvant fonctionner de manière sélective pour extraire un contenu à partir de ladite transmission, ledit récepteur pouvant en outre fonctionner pour extraire des métadonnées (SI) à partir de ladite transmission et un filtre (204) agencé pour recevoir lesdites métadonnées, le terminal comprenant en outre une interface réseau (168) et le filtre (204) pouvant fonctionner selon un ensemble de préférences de contenu spécifiques à l'utilisateur pour fournir en sortie des métadonnées personnalisées (SI') par l'intermédiaire de l'interface réseau (168) à un dispositif (176) et, en réponse à une requête (C) reçue par l'intermédiaire de ladite interface, pour extraire un contenu particulier identifié dans lesdites métadonnées personnalisées, **caractérisé en ce que** les préférences de contenu spécifiques à l'utilisateur peuvent être augmentées par un ensemble de paramètres définissant les capacités du dispositif (176) et le filtre pouvant en outre fonctionner de façon à prendre en compte les capacités quand il filtre les métadonnées (SI).

2. Terminal selon la revendication 1, dans lequel lesdites métadonnées (SI) comprennent des informations de service.

3. Terminal selon la revendication 1, dans lequel ladite interface réseau (168) fournit une capacité de réseau par le biais d'une technologie de radiofréquence à faible puissance.

4. Terminal selon la revendication 3, dans lequel ladite interface réseau (168) fournit une capacité de réseau par le biais d'une technologie Bluetooth.

5. Terminal selon la revendication 1, dans lequel ladite interface réseau (168) est une interface réseau sans fil (168).

6. Terminal selon la revendication 1, dans lequel les métadonnées personnalisées (SI') sont fournies en sortie avec un contenu supplémentaire.

7. Terminal selon la revendication 1, pouvant fonctionner pour fournir en sortie ledit contenu particulier à ladite interface réseau sans fil (168).

8. Interface réseau (168) ayant une connexion à un terminal récepteur de diffusion numérique à large bande (106), l'interface comprenant une entrée pour des métadonnées (SI) reçues à partir dudit terminal récepteur et un filtre pouvant fonctionner selon un ensemble de préférences de contenu spécifiques à l'utilisateur pour générer des métadonnées personnalisées (SI') devant être dirigées vers un dispositif (176) **caractérisée en ce que** les préférences de contenu spécifiques à l'utilisateur peuvent être augmentées par un ensemble de paramètres définissant les capacités du dispositif (176) et le filtre pouvant en outre fonctionner de façon à prendre en compte les capacités quand il filtre les métadonnées (SI).

9. Interface réseau selon la revendication 8, dans laquelle lesdites métadonnées personnalisées (SI') comprennent des informations de service identifiées selon lesdites préférences.

10. Dispositif (176) comprenant un émetteur-récepteur sans fil pouvant fonctionner pour établir un canal à un terminal (106) pour extraire de manière sélective un contenu à partir d'une transmission numérique à large bande, le dispositif comprenant en outre un écran, un contrôleur et un dispositif d'entrée, dans lequel le contrôleur peut fonctionner en réponse à la fourniture, en provenance dudit terminal, de métadonnées personnalisées (SI') identifiant le contenu dans ladite transmission pour produire lesdites métadonnées sur ledit écran et ledit contrôleur pouvant en outre fonctionner, en réponse à l'activation dudit dispositif d'entrée, pour effectuer une sélection parmi lesdites métadonnées produites et pour générer une requête (C) en vue d'une fourniture par ledit émetteur-récepteur sur ledit canal, la requête identifiant le contenu devant être extrait par ledit terminal, **caractérisé en ce que** le dispositif (176) peut fonctionner pour transmettre un ensemble de paramètres définissant les capacités du dispositif.

11. Dispositif selon la revendication 10, dans lequel le dispositif (176) est un téléphone portable.

12. Procédé de sélection d'un contenu en vue d'une extraction par un terminal (106) à partir d'une transmission numérique à large bande qui lui est délivrée, comprenant l'extraction des métadonnées (SI) à partir d'une transmission reçue par ledit terminal, lesdites métadonnées identifiant un contenu fourni dans ladite transmission, le filtrage desdites métadonnées selon un ensemble prédéterminé de préférences utilisateur afin d'obtenir des métadonnées personnalisées (SI'), la fourniture desdites métadonnées personnalisées (SI') à un dispositif (176), la réception d'une requête de sélection (C) à partir dudit dispositif comprenant des informations identifiant ledit contenu, **caractérisé en ce que** les préférences utilisateur peuvent être augmentées par un ensemble de paramètres définissant les capacités du dispositif (176) et le procédé comprend en outre le filtrage des métadonnées (SI) en prenant en compte les capacités.

13. Procédé selon la revendication 12, dans lequel la transmission des métadonnées personnalisées (SI') au dispositif (176) et la réception de la requête de sélection en provenance de celui-ci ont lieu en utilisant le protocole d'application sans fil (WAP).

14. Procédé selon la revendication 12 ou la revendication 13, dans lequel la transmission des métadonnées personnalisées (SI') au dispositif (176) et la réception de la requête de sélection en provenance de celui-ci ont lieu en utilisant une application Java dans le dispositif.

15. Procédé selon l'une quelconque des revendications 12 à 14, dans lequel lesdites métadonnées personnalisées (SI') sont fournies audit dispositif (176) en réponse à une requête de navigateur reçue en provenance de celui-ci.

16. Procédé selon l'une quelconque des revendications 12 à 15, comprenant l'identification d'un contenu spécifique à partir desdites métadonnées personnalisées (SI') et la génération d'un message en vue d'une fourniture audit dispositif (176), ledit message indiquant ledit contenu spécifique.

17. Procédé selon l'une quelconque des revendications 12 à 15, comprenant l'identification d'un contenu spécifique à partir desdites métadonnées personnalisées (SI') et la génération d'un message en vue d'une fourniture audit terminal, ledit message indiquant ledit contenu spécifique.

18. Procédé selon l'une quelconque des revendications 12 à 17, dans lequel la fourniture desdites métadonnées personnalisées (SI') est accompagnée d'un contenu.

19. Procédé selon l'une quelconque des revendications 12 à 18, dans lequel le contenu est également filtré sur la base des préférences utilisateur et des caractéristiques dudit dispositif (176).

20. Procédé selon l'une quelconque des revendications 12 à 19, dans lequel la transmission numérique à large bande est une transmission de diffusion DVB (diffusion numérique).

21. Procédé selon la revendication 20, dans lequel les métadonnées (SI) comprennent des informations de service comprises dans la transmission numérique à large bande.

22. Procédé selon l'une quelconque des revendications 12 à 21, dans lequel les métadonnées (SI) comprennent un flux de données d'informations de service.

23. Procédé de sélection d'un contenu dans un dispositif (176) en vue d'une extraction par un terminal (106) à partir d'une transmission numérique à large bande qui lui est délivrée, comprenant la transmission d'un ensemble de paramètres définissant les capacités du dispositif, la réception de métadonnées personnalisées (SI') à partir dudit terminal ; l'identification d'un contenu spécifique à partir desdites métadonnées personnalisées (SI') et la génération d'un message en vue d'une fourniture audit terminal, ledit message indiquant ledit contenu spécifique et la réception dudit contenu spécifique à partir dudit terminal.

24. Procédé selon l'une quelconque des revendications 12 à 23, dans lequel les métadonnées personnalisées (SI') sont filtrées selon les caractéristiques du dispositif (176).

25. Procédé selon l'une quelconque des revendications 12 à 24, dans lequel le terminal (106) est un récepteur de diffusion numérique à large bande.

26. Procédé selon l'une quelconque des revendications 12 à 25, dans lequel le dispositif (176) est un téléphone portable.
